# EUROPEAN PATENT SPECIFICATION

(11) **EP 1 175 749 B1**
(45) Date of publication and mention of the grant of the patent: **06.07.2005**
(21) Application number: 00922296.9
(22) Date of filing: 18.04.2000
(51) Int. Cl.: H04L 9/30, H04L 9/32

(54) **HIGH SECURITY BIOMETRIC AUTHENTICATION USING A PUBLIC KEY/PRIVATE KEY ENCRYPTION PAIRS**
HOCHSICHERHEITS-BIOMETRISCHE AUTHENTIFIZIERUNG MITTELS PRIVATEM UND ÖFFENTLICHEM SCHLÜSSELPAARES
AUTHENTIFICATION BIOMETRIQUE HAUTE SECURITE AU MOYEN DE PAIRES CLE PUBLIQUE/CLE PRIVEE DE CRYPTAGE

(30) Priority: 22.04.1999 US 130721 P; 06.05.1999 US 306148
(43) Date of publication of application: 30.01.2002
(73) Proprietor: Veridicom, Inc., Seattle, WA 98104 (US)
(72) Inventor: ROWLEY, Thomas, E., III, San Jose, CA 95120 (US)
(74) Representative: Viering, Jentschura & Partner
(86) International application number: PCT/US2000/010415
(87) International publication number: WO 2000/065770

(56) References cited:
- EP-A- 0 923 018
- US-A- 5 832 091

## Description

### BACKGROUND

### 1. Field of the Invention

The present invention relates to public key encryption systems, e.g., those employing a public key/private key pair, and more specifically to a method and apparatus for increasing the security of authentication by employing a more tamper resistant biometric authentication system.

### 2. Background Information

It is well known in the art of encrypting messages to utilize what are known as public key systems. In a public key cryptosystem, a plain text message may be encrypted by inputting the message and an enciphering key to an encryption algorithm. To decipher the message, the encrypted message is input to the inverse of the same algorithm along with a deciphering key. As with many encryption techniques, the encryption algorithm transforms of the plain text message in a manner that is so complicated that it is computationally infeasible to reverse the process even if the algorithm is known.

A peculiarity of public key systems is that it is also computationally infeasible to determine the deciphering key from the enciphering key. Consequently, in a public key cryptosystem, both the algorithm and the enciphering key may be made available to the public without jeopardizing the security of a message enciphered with the enciphering key. Hence the term "public key" for the enciphering key. The deciphering key, which is confidential, is known as a "private key". With a public key system, anyone who wishes to receive encrypted messages may make an encryption algorithm and a public key freely available.

A sender's authentication can also be achieved utilizing cryptographic systems. In a derived key system, where a sender and receiver utilizing public parts of their keys negotiate a transaction key, by that negotiation that can insure that only the two have the transaction key. However, if either has had its public key system private key compromised then the negotiation by encrypting a message with a key supposedly known only to authorized persons will falsely tell the recipient that the message came from an authorized source.

In a public key cryptographic system, if the sender encrypts information using the sender's secret key, all recipients will be able to decipher the information using the sender's public key, which is available to all. The recipients can be assured that the information originated with the sender, because the public key will only decrypt material encoded with the sender's private key. This also assumes, however, that the sender is the only one with access to the sender's private key. Since, presumably, only the sender has the private key, the sender cannot later disavow that he sent the information.

The use of encryption techniques provides a basis for creating electronic signatures to documents. At least two ways exist whereby encryption can be utilized to electronically "sign" a document. The first method is to encrypt the entire document using the signer's private key. The second is to encrypt only a message digest of the document. A message digest could be a hashing code or the like which produces a unique compressed coded representation of the electronic content of the document. The integrity of the text of the document, as well as the identity of the sender, can be verified by sending an encrypted version of the code and having the receiver decrypt the hashing code and compare it to the hashing code developed on its end from the electronic content of the document as received. Those skilled in the art will appreciate the fact that a hashing code is particularly well suited for these applications since a small change in the electronic content of the document results in a very large change in the hashing code. United States Patent No. 5,850,442, issued to Muftio on December 15, 1998, entitled SECURE WORLD WIDE ELECTRONIC COMMERCE OVER AN OPEN NETWORK ("the '442 patent"), discloses aspects of such a system.

Public key encryption software is widely available. For example, Pretty Good Privacy (TM) public key encryption software is available for non-commercial use over the Internet in a form published by Phillip Zimmerman. One version, is PGP version 2.6.2 of Oct. 11, 1994. It is available from the Massachusetts Institute of Technology at net-dis.mit.edu, a controlled FTP site that has restrictions and limitations to comply with export control requirements. The software resides in the directory /pub/PGP. A fully licensed version of PGP for commercial use in the U.S.A. and Canada is available through ViaCrypt in Phoenix, Arizona. The Federal Data Encryption Standard (DES) is a single key encryption system that is also publicly available in many forms.

However, these systems still assume that the sender was the rightful possessor of the private key. It is also subject to an interloper assuming the identity of the recipient and falsely utilizing the recipient's published public key. The '442 patent proposes a solution to this latter problem by utilizing a third party "trusted agent" to certify the user of the public key. But the '422 patent also recognizes that even this is a compromising situation, since the typical access verification systems to obtain the trusted party certification are subject to compromise.

The '422 patent suggests utilizing a network including a plurality of user terminals connected to the network -- at least some of which are equipped with the ability to read and/or write smart tokens containing cryptographic keys. A plurality of servers and one or more security servers are also connected to the network. The security server certifies the public keys of users registered to engage in commercial transactions or the public keys of other security servers. The network is arranged so that encryption keys from a smart token may be authenticated by one or more security servers and used to ensure the origin and authenticity of electronic transactions conducted using the user terminals and servers.

Public key encryption systems can be subject to a vulnerability involving the use of bogus time stamps. A user may alter the date and time setting of the user's systems clock and generate either public key certificates or signatures that appear to have been created at a different time. The user can make it appear that a document was signed earlier or later than it was actually signed or sent. This may have some type of benefit, for example, by creating circumstances that might allow the user to repudiate a signature.

In some situations, where the generation of an accurate time stamp is not practical, the art has substituted a monotonically increasing large number that can be used to place documents generated in a given order in that order when received.

In situations where it is critical that a signature has the correct date and time, or is otherwise to be placed in particular order, an electronic equivalent of a notary has been utilized in the art. An electronic notary, a third party trusted agent, would apply the notary's electronic signature to other people's electronic signatures, thus witnessing the date and time of the signed document. A notary could actually maintain a log of detached signature certificates and make it available for public access. The notary's signature would have a trusted time stamp, which might carry more credibility than a time stamp on the original signature alone.

Another certification proposal, Network Working Group Request For Comments No. 1422, dated February 1993, addresses privacy enhancement for Internet electronic mall and particularly address certificate-based key management. These proposals incorporate concepts utilized in the X.400 Message Handling System model of CCITT Recommendation X.400, the directory system Recommendation X.500 and the CCITT 1988 Recommendation X.509 directed to an authentication framework.

Smart cards have been developed that include a processor and/or memory built into a transport medium the size of a typical credit card. The processors in these cards can be programmed like any other computer to perform desired functions. Smart card readers are known that permit one to read the contents of a smart card, and to interact with the smart card to change its contents or to utilize digitally stored information on the card for authentication purposes.

The use of biometric sensors to create data that is later used to verify that another sensed sample of the biometric data identifies the individual providing the sensed data is known in the art. United States Patent No. 4,876,726, issued to Capello on October 24, 1989, entitled METHOD AND APPARATUS FOR CONTEXTUAL DATA ENHANCEMENT (''the '726 patent"), for example, discloses a fingerprint identification system in which a fingerprint is digitized into an image consisting of pixels. That image data is compared to stored data representing many such fingerprints using a comparison algorithm to see if a match can be obtained.

U.S. Patent No. 5,832,091, issued to Tomko on November 3, 1998, entitled "FINGERPRINT CONTROLLED PUBLIC KEY CRYPTOGRAPHIC SYSTEM, ("the '091 patent") discloses the use of an enrollment device which converts, e.g., a fingerprint, into a two-dimensional gray scale pixel representation. This data is transformed in a scrambled fashion unique to the enrollee and the descrambling information stored on a storage medium, e.g., a "smart card," the enrollee carries with him/her. Subsequently, the enrollee's biometric feature is sensed and the information on the smart card is used to descramble the sensed data to find a match. If a match is found, the system at that point generates from the data representing the biometric identifier itself a public key/private key pair for the enrollee for purposes of encrypting/decrypting messages. However, since the transformed two dimensional grayscale pixel representation is still used to generate a public key/private key pair, and only then is the public key pair transmitted to system subscribers, if the individual with the "wrong" biometric information gets the key and is identified to the public-key encryption network as the wrong person, than the benefits of a "public-key" cryptographic system would still be available to the wrong possessor of the enrollee's smart card. That is to say, the biometric identification system and its security measures seem to clearly identify the individual subsequently as being or not being the "right" person having or not having the "right" "unique number."

The system of the '091 patent does not seem to deny access to the "public-key" encryption system, but only to access to the system with the same keys as the "right" holder of the smart card would have generated. Since the keys are only broadcast to the other subscribers after this possibly false identification of the possessor of the smart card, the smart card system of the '091 patent does not seem to provide authenticated uses of the public key encryption system at all.

United States Patent No. 5,469,506, issued to Berson et al. on November 21, 1995, entitled APPARATUS FOR VERIFYING AN IDENTIFICATION CARD AND IDENTIFYING A PERSON BY MEANS OF A BIOMETRIC CHARACTERISTIC, ("the '506 patent'') discloses a system whereby the person wishing to have his/her identity verified for access or other reasons carries a token, e.g., a card that contains magnetically stored digitized data representative of a biometric previously scanned and recorded. A similar scanner compares the data on the card to the scanned biometric data from the bearer of the card to determine if there is a match. This form of system, however, even if used for access to a private key of a public key/private key pair is still subject to the above noted forms of security breach, in that a third party issuing the private key has access to the public key/private key pair, and the token is subject to tampering.

The same can be said for the system disclosed m United States Patent No. 5,280,527, issued to Gullman, et al. on January 18, 1994, entitled BIOMETRIC TOKEN FOR AUTHORIZING ACCESS TO A HOST SYSTEM, ("the '527 patent"). The '527 patent discloses the use of fixed biometric data in combination with other random data to obtain access to secure places, such as electronic financial transactions. The invention supplants the user I.D., e.g., a "PIN." with biometric ciata previously recorded and stored and uses a token for scrambling the transmission of the identification data back to a remote site, e.g., the computer at the bank. Tokens scramble the PIN or other identifying data so unauthorized listener cannot link the PIN to an account at the bank. In the '527 patent, biometric data is used as a "seed" for the random generation of the token. The system as disclosed uses a card storage to store the biometric data compared to the input at a remote site from the host computer, e.g., at an ATM machine. The biometric comparison is done in the remote site, and simply acts as a more complex PIN.

United States Patent No. 5,245,329, issued to Gokcebay on September 14, 1993, entitled ACCESS CONTROL SYSTEM WITH MECHANICAL KEYS WHICH STORE DATA, ("the '329 patent'') discloses the use of biometrics stored on a card carried by the person to be identified against data scanned at the site to which access is sought, in combination with another item needed for access, such as a key or access card. This system also is subject to security breaches in that third parties also have access to whatever is kept in the site to which access is sought and the token is subject to tampering.

United States Patent No. 4,993,068, issued to Piosenka, et al. on February 12, 1991, entitled UNFORGEABLE PERSONAL IDENTIFICATION SYSTEM ("the '068 patent") discloses a similar system without the added access requirement, i.e., an additional key or access card.

Yet another similar system is disclosed in United States Patent No. 4,532,508, issued to Ruell on July 30, 1985, entitled PERSONAL AUTHENTIFICATION SYSTEM ("the '508 patent") The '508 patent discloses a system wherein the contents of the token are further scrambled or encrypted in some fashion to prevent unauthorized use.

United States Patent No. 5,138,468, issued to Barbanell on August 11, 1992, entitled KEYLESS HOLOGRAPHIC LOCK (''the '468 patent"), also discloses the use of biometric data compared against stored data to provide identification and access.

United States Patent No. 5,268,963, issued to Monroe, et al. on December 7, 1993, entitled SYSTEM FOR ENCODING PERSONALIZED IDENTIFICATION FOR STORAGE ON MEMORY STORAGE DEVICES ("the '963 patent''), discloses a system wherein the biometric image data of an individual is encrypted by adding randomized unique serialized information according to a key derived from, e.g., the serial number of the terminal that issued the personalized I.D. The system is designed to decrypt and reproduce the stored encrypted image as opposed to comparing it to stored biometric image data.

United States Patent No. 5,578,144 issued to Aucsmith, et al. on March 2, 1999, entitled DIGITAL CERTIFICATES CONTAINING MULTIMEDIA DATA EXTENSIONS ("the '144 patent"), discloses a system for creating and issuing a token ("digital certificate") for authentication of a person seeking remote access to stored data. The "digital certificate" may include within it authenticating information, including biomotrie information. This information forms a "signature" that guarantees the authenticity of the certificate. The certificate also contains the public key encryption key of the authentic bearer.

United States Patent No. 5,872,848, issued to Romney, et al. on February 16, 1999, entitled METHOD AND APPARATUS FOR WITNESSED AUTHENTICATION OF ELECTRONIC DOCUMENTS ("the '848 patent"), discloses a system employing a sort of digital ''Notary Public" authenticating the "electronic" signature of the owner of an electronic document. The digital document is encrypted using the owner's private key corresponding to a public key. The "Notary" verifies that the "signature" was so done and the identity of the owner (by usual documentary means or through biometrics), and attaches a digital "authenticator identification envelope" ("notary stamp") to the digital document. The "notary stamp" can also include biometric data identifying the owner.

United Slates Patent No. 5,872,849, issued to Sudia on February 16, 1999, entitled ENHANCED CRYPTOGRAPHIC SYSTEM AND METHOD WITH KEY ESCROW FEATURE ("the '849 patent"), discloses a system for the secure generation, certification, storage and distribution of public-key encryption key pairs and for their escrow and public key certificate management.

The '849 patent also discloses the use of a "tamper-resistant" chip or a tamper-resistant trusted device containing the chip that performs the encryption, decryption and digital signature according to a non-modifiable public/private signature key unique to the particular chip and with a "manufacturer's certificate." The chip "has the ability to use the device signature key [unique to the chip] to sign a request for certification of the user public signature key that it has generated for the user, thus proving that the user signature key pair was generated by, and the private key is being safeguarded by a device of known tamper-resistant properties." The system can generate public and private keys for a user and escrow them and certify the escrow. The system is immensely complicated in its escrowing features, including external escrowing and piece-wise escrowing, in order to attempt to deal with governmental wiretap facilitation requirements. The system also is designed to escrow private keys for multiple users that can be accessed by the particular user upon presentation of some authentication, including password or PINs, but also including biometric input.

The '442 patent, mentioned above, discloses a system for ensuring that the user of a public key is indeed the registered user, and not an interloper. The system involves escrowing the public keys with a "trusted third party" and obtaining certification from the trusted third party that the user of the public key is the authentic one. The system uses a smart token for access management and control and the smart token can be uniquely linked to its proper owner by biometric techniques, including biometric information stored on the card.

United States Patent No. 5,838,812 issued to Pare, Jr., et al. on November 17, 1998, entitled TOKENLESS BIOMETRIC TRANSACTION AUTHORIZATION SYSTEM ("the '812 patent'') discloses a system that utilizes a remote computer to store the biometric data to be compared with the user of the system seeking to authenticate his/her identity, as opposed to having the biometrics on the user's card ("token").

United States Patent No. 5,748,838, issued to Bisbee, et al. on May 5, 1998, entitled SYSTEM AND METHOD FOR ELECTRONIC TRANSMISSION, STORAGE AND RETRIEVAL OF AUTHENTICATED DOCUMENTS ("the '738 patent"), discloses a system whereby a trusted third party acts essentially as a "notary" to authenticate the user of a cryptographic system by appending a digital signature of the third party to the document. To register with the third party the cryptographic user sends in its public key along with verification of the user's biometric information, which is then provided back to the user in the form of a token card to be used to access the system.

United States Patent No. 5,878,139, issued to Rosen on March 2, 1999, entitled METHOD FOR ELECTRONIC MERCHANDISE DISPUTE RESOLUTION (''the '139 patent"), discloses a system utilizing a third party trusted agents in supposedly tamper proof environment utilizing tamper-proof devices to act as electronic certifiers or intermedisries, e.g., for the purposes of facilitating a commercial transaction involving real-time delivery of a product electronically and the real-time electronical payment.

EP Application No. 0 923 018 A2, published June 16, 1999, concerns a personal authentication system that uses fingerprints to gain access to authenticate a user, likely of a computer system. The document generally indicates that an image of a finger is captured and compared against stored images in its database. If a matching image is found, then the image is authentic.

All of the foregoing systems have drawbacks. Those systems that rely on third parties as trusted agents in either a certification or "notary public" type of role or act as escrows for the secure information, such as a public key/private key pair, are only as tamper proof as the trusted agent chooses to make them. The trusted agent is subject to corruption and can falsely issue the certification or the escrowed keys. Those systems that rely on tokens are only as secure as the issuer of the token makes them. False tokens identifying another individual, and incorporating the biometric data of the false individual are subject to being issued by the issuer or forgers as is the case with credit cards or check cards and, e.g., PIN, password or other identifiers (including biometrics) of the possessor of the token.

Furthermore, systems that encrypt the entire message or transaction information are subject to the burgeoning efforts of the Federal government to preserve governmental access, thus requiring complex escrowing schemes to try to ensure only government access in addition to the authorized party encrypting the message or transaction. While such systems may be more "tamper proof" in that multiple third party agents would need to be corrupted, they are, nevertheless, complicated to use.

Moreover, the systems that distribute the biometric data of the enrollee to a third party escrow or notary can be corrupted to permit access to the biometric data of the enrollee by the government or other third parties without the authorization of the enrollee. Such access may be for unauthorized access to the enrollee's secure keys or information, or carrying out unauthorized transactions in the name of the enrollee. Therefore, the "non-repudiation" feature reputed to public key/private key pair systems are not without the possibility of compromise through unauthorized access to the pair.

### SUMMARY OF THE INVENTION

The present invention utilizes a trusted sensor contained within or peripheral to the personal computer of enrollee. The enrollee is enrolled using an enrollment process that is unique to the enrollee's own personal trusted sensor to generate the public key/private key pair for the enrollee. The system employs integrated circuits contained within the computer, either consisting of the CPU of the computer or peripheral to the CPU (e.g., a co-processor), which enroll the enrollee by sampling a biometric of the enrollee and storing the biometric for future comparison. The biometric is sampled by a suitable sampling device, for example, existing capacitive fingerprint detectors, which may utilize a CCD or CMOS digital imaging device. This may be incorporated into the computer, (e.g., as part of the keyboard or CRT housing), or may be a stand alone peripheral connected to the computer through an input output port. The sampled biometric is converted into data indicative of the characteristics of the biometric so that it can be later used by the integrated circuit to verify a current user as being the enrollee. It is stored in memory on the integrated circuit (or "chip"). The chip also generates a public key/private key pair that is verifiable as having been generated by the same chip that contains the biometric identifier of the enrollee. When the enrollee is ready to verify that a message or transaction is indeed sent from or being transacted by the enrollee, the enrollee has the appropriate biometric resampled. The biometric is converted to the identifying features and compared to the data stored in the chip memory. The private key matching the enrollee is then produced by the chip. The enrollee never has to know or handle the secret "private key" or carry it around, thereby removing a possible source of compromise of the key. No third party is ever exposed to the private key or to the enrollee's biometric data.

The public key/private key pair so generated can be utilized in a variety of ways, but in the preferred embodiment it is utilized as an authorizing signature. The preferred embodiment utilizes a coded representation, such as a hashing code, of the particular message being transmitted (which can be a message otherwise sent in the clear or an electronic commercial transaction) and encrypts the hashing code with the private key. This encrypted hashing code is transmitted with the message, and if necessary with the enrollee's public key. The recipient verifies the "signature" by decrypting the hashing code using the enrollee's public key and comparing it to the actual hashing code generated from the clear text message/transaction data. For added security other identifying information, such as a "date stamp" can be encrypted with the enrollee's private key, to be decrypted by the recipient.

In addition to certification of the source of a message or a transaction, the present invention is susceptible of other related uses. For example, the password or other access code for access (remote or otherwise) by an employee to the internal network of a company can be encrypted with the public key/private key pair generated by the system for the enrollee. This could also include special access codes or the like for especially secure parts of the employer's network or databases or the like, for example research and development information, personnel files, etc.

### BRIEF DESCRIPTION OP THE DRAWINGS

FIG. 1 shows a block diagram of the main elements of an embodiment of the present invention.
FIG. 2 shows a block diagram of the main elements of a secure or "trusted" sensor according to an embodiment of the present invention.
FIG. 3 shows a block diagram of the parties to the encryption scheme according to an embodiment of the present invention.
FIG. 4 is a flowchart illustrating the process for enrolling biometric information according to an embodiment of the present invention.
FIG. 5 is a flowchart illustrating the process of verifying a trusted sensor according to an embodiment of the present invention.
FIG. 6 is a flowchart illustrating the authentication or authorization process according to an embodiment of the present invention.

The use of similar reference numerals in different Figures indicates similar or identical items.

### DETAILED DESCRIPTION OF A PREFERRED EMBODIMENT

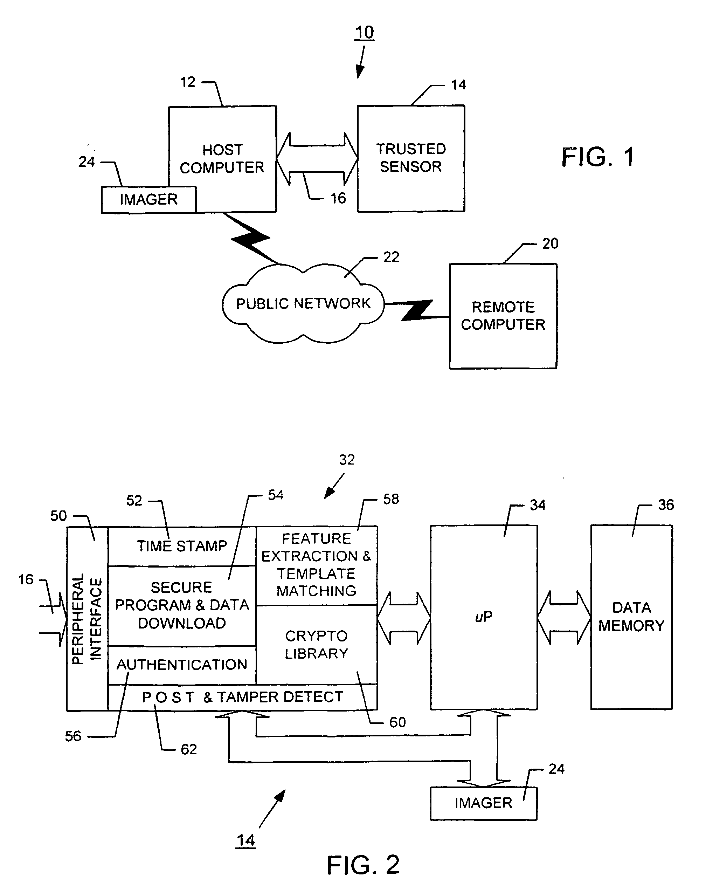

FIG. 1 is a block diagram of an embodiment of the present invention. The public key access verification system 10 of the present invention includes a host computer 12, e.g., a desktop PC employing, e.g., a 32 bit Pentium II microprocessor or a 64 bit Pentium III RISC microprocessor, both made by Intel. The host computer 12 is connected to a trusted sensor 14 by a data transfer bus 16, e.g., a standard RS-232 or a Universal Serial Bus ("USB") serial data interface bus. Integrated into the host computer 12, e.g., as a part of its keyboard or its CRT display terminal, or interconnected to the host computer 12 as an external peripheral is a fingerprint image capture device ("ICD") or imager 24, which may be any of a number of digital imaging devices available on the market utilizing either Charge Coupled Device ("CCD") or CMOS digital imaging technologies known in the art. According to one embodiment, the imager 24 includes a fingerprint analyzer chip FPS110 available from Veridicom, Inc., or a similar capacitive fingerprint sensor as is disclosed in U.S. Patent No. 6,049,620.

The host computer 12 is connected through the public network, such as the Public Switched Telephone Network ("PSTN"), an intranet, the Internet or an equivalent public network 22 to a recipient computer 20.

Turning now to FIG. 2, the trusted sensor 14 is shown to include a functions section 32, a microprocessor 34, and a data memory 36.

The microprocessor can be an off-the-shelf microprocessor, e.g., a Pentium II or III, an NEC VR4121, a Philips P38W858 secured controller or a Philips HSIS/IR9802 Smart XA Microcontroller. Altematively, the microprocessor 34 can be a DSP, e.g., an ADSP 2141 provided by Analog Devices, or it can be a customized 16-, 32- or 64-bit architecture microprocessor core or Digital Signal Processor ("DSP") available from ATMEL or Analog Devices. The microprocessor 34 can also include or be connected to an address and control chip which also contains assorted "glue" logic, as is known in the art, and identified as a 29LV160B or an AM29LV8003B120 EC available from AMD or an ST M29W800AB120 available from SGS Thompson.

The data memory 36 can be virtually any off-the-self ROM, EPROM or the like, along with RAM. According to one embodiment, the data memory 36 includes a 4Mx16 SDRAM, e.g., a PD4564163G5-A10L-9JF memory chip available from NEC.

In the embodiment shown in FIG. 2, the fingerprint image capture device 24 is communicatively coupled directly to the microprocessor 34 within the trusted sensor 14. The data memory 36 is also coupled to the microprocessor 34 and can also be coupled to the functions module 32. According to one embodiment the image capture device 24 is coupled to the microprocessor 34 and the functions section 32.

The functions section 32 is a graphical representation of a set of functionalities performed within the trusted sensor 14 that may be implemented in application software run on the microprocessor 34, or in firmware, including some specialized hardware circuitry not ordinarily part of a microprocessor architecture and adapted to facilitate fingerprint analysis and/or matching, large random number generation, exponentiation, encryption and the like.

The functions section 32 includes a peripheral interface 50 to the host computer 12 over the bus 16, which may be a serial interface such as an RS-232, USB or a bus level bus like ISA or PCI, with the preferred embodiment comprising an ISA interface. The peripheral interface 50 is essentially a communications protocol interface to the outside world, for example with an associated host computer that manages the formatting and synchronization of the input and output data transfers to and from the trusted sensor 14.

The function section 32 also includes a secure time stamp generator or monotonically increasing number generator 52.

In addition, the functions section 32 includes a secure data and program download module 54. The secure data and program download section 54 is one of a number of currently available security functionalities for ensuring that the internal workings of the trusted sensor 14 are not corrupted by unauthorized modifications various modules of the functions section 32 or through the introduction of false data, e.g., biometric image data.

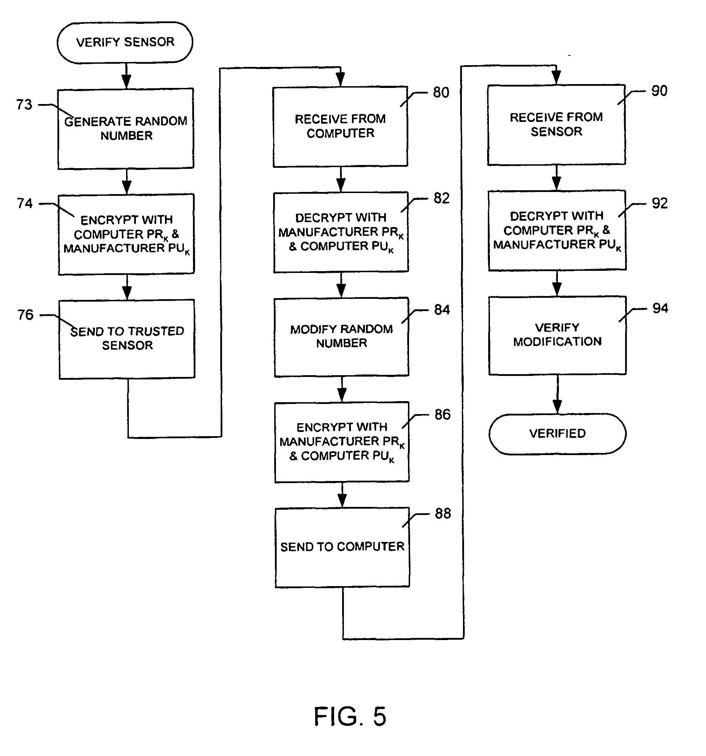

The authentication module 56, also an element of functions section 32, includes software for communicating with the host computer 12 and certifying that the trusted sensor 14 is the genuine trusted sensor. The host computer 12 contacts the microprocessor 34 within the trusted sensor 14 utilizing the software and communication protocols within the authentication module 56 and transmits to the microprocessor 34 a large randomly generated number encrypted by a public key associated only with the manufacturer of the trusted sensor 14 or with the trusted sensor 14 itself. The microprocessor 34 within the trusted sensor 14 decrypts the encrypted number using its unique private key, paired with the manufacturer public key or the public key unique to the trusted sensor 14. The private key for each trusted sensor 14 is unique to the sensor and only available within the sensor. The private key of the trusted sensor 14 is established at the time of its manufacture by the manufacturer. The microprocessor 34 within the trusted sensor 14 then modifies the large random number in some easily identifiable fashion, e.g., by adding a fixed number such as 1 to the large random number, encrypts it using the known public key of the host computer 12 and retransmits this modified number to the host computer 12. Upon receipt, the host computer 12 decrypts the modified large random number and verifies the expected modification, thereby assuring that the trusted sensor 14 is the right trusted sensor 14. A diagramatic representation of the authentication module 56 described above is resented below with reference to FIG. 5.

A fingerprint (or other biometric) feature extraction and template matching module 58 is also included in the functions section 32. The feature extraction module 58 is one of a number of fingerprint or other biometric identification algorithms in use on the market today for generating from a digital image of the features of the biometric a ''template'' of identifying aspects and for analyzing whether a sensed template matches a stored template. An embodiment of such a matching module 58 (and a multidimensional fingerprint constellation) are described in WIPO Publication No. WO 01/06447, entitled METHOD AND SYSTEM OF FINGERPRINT TEMPLATE MATCHING, as well as PCT International Application No. PCT/US01/03275, entitled BIOMETRIC FALSE ACCEPT DETECTION, both by Applicant Veridicom, Inc.

The functions section 32 also has a cryptographic library 60. The crypto-library 60 utilizes, for example, software cryptographic functions of Cryptolib 1.1 by Jack Lacy of AT&T Bell Labs. Other examples of cryptographic software packages and functionalities that can be employed are Arbitrary length Bignums; bigmath package, including, bigAdd, bigSubtract, bigMultiply, bidDivide, bigRightShift, bigLeftShit, bigAnd, bigOr, bigXor, bigCopy, Euclid's extended GCD, and modular reduction and exponentiation; crypto primitives, including, DES and 3DES + modes, Diffie-Hillman, DES (signing and verification roughly equivalent). El Gamal, Rabin's scheme, Random number generation (pseudo and true), MD [2,4,5], prime generation, RSA, SHA, truerand (for UNIX, Windows NT and Windows 95), quantization (for defense against Kocher's timing attack) and quantized RSA, DSA and El Gamal private key operations; and support functions, including, asnl.c, ioutils.c and netIface.c. Examples of computation times of some of these modules and/or functionalities are shown below.

Table I contains representative times using different software and different computers for the bigPow times (a^b mod c, with a, b and c the same length, i.e., 512 and 1024 bits).

**Table 1**

| 512 bits | 1024 bits | Machine |
|---|---|---|
| .12s | .72s | Sparc II (Brickell BigPow) |
| .43s | 3.0s | Sparc II w/asm (gcc) |
| .12s | .78s | Sparc 10 w/asm (gcc) |
| .03s | .17s | Spare 10 w/asm (Brickell BigPow) |
| .084s | .45s | SGI 150 Mhz Indigo |
| .109s | .75s | 100 Mhz Pentium (gcc under DOS) |

Table II shows times for StrongPrime generation with ProbTestAttempts = 5 and 100 primes generated per test. The times shown are total test time divided by 100 to give an average time per prime generated using Gordon's strong prime algorithm.

**Table II**

| 256 bits | 512 bits | 1024 bits | Machine |
|---|---|---|---|
| 2.8s | 24.0s | 5.11m | Sparc II |
| .45s | 2.7s | 77s | 100Mhz Pentium |

Table III shows encryption and decryption times for encrypting a typical hashing code of 160 bits in length with an RSA 64 bit public exponent.

**Table III**

| Function | 512 bits | 768 bits | 1024 bits | Machine |
|---|---|---|---|---|
| encrypt | 30ms | 50ms | 80ms | Sparc II |
| decrypt | 160ms | 480ms | 930ms | Sparc II |
| encrypt | 15ms | 33ms | 56ms | 100 MHz Pentium (NT) |
| decrypt | 38ms | 104ms | 214ms | 100 MHz Pentium (NT) |

Table IV shows sign and verify times for DSA.

**Table IV**

| Function | 512 bits | 768 bits | 1024 bits | Machine |
|---|---|---|---|---|
| sign | 99ms | 166ms | 216ms | Sparc II (Brickell speedup) |
| verify | 156ms | 316ms | 416ms | Sparc II (Brickell speedup) |
| sign | 21ms | 38ms | 49ms | 100 Mhz Pentium (NT) |
| verify | 27ms | 43ms | 71ms | 100 Mhz Pentium (NT) |

The functions section also includes a (Power On Self Test) P.O.S.T. and tamper detect module 62, The P.O.S.T. and tamper detect module 62 implements any of a number of well-known P.O.S.T. system tests on power on and also any of a number of well-known tamper detect programs. For example, the FIPs 140 tamper detection and resist protocols, can be implemented, which can detect unauthorized attempts to crack into the trusted sensor 14 and either record them for subsequently informing the enrollee of such attempts or actively resist them by, for example, erasing stored secure information such as templates and private keys so that unauthorized access is prevented.

The physical integrated circuit or circuits constituting the trusted sensor 14 are themselves packaged in any of a number of well-known tamper resistant packaging methodologies, which, e.g., cause physical destruction to an integrated circuit, or in the case of EPROM°s and the like, destroy the secure information stored in the memory of the integrated circuit in the event that a attempt is made to electronically access the memory without a properly encrypted access code, or an attempt is made to physically extract the integrated circuit from the packaging.

Some other functionalities to the functions section 32 of the present invention, excepting a secure, tamper-resistant memory, can be found in the N*Click product, which is described at http://www.nabletech.com.

In operation, the trusted sensor 14 is used to enroll an enrollee and to generate a public key/private key pair unique to the enrollee and/or unique to the specific biometric used (right thumb, left thumb, right eye, etc.). The trusted sensor returns the encrypted template to the host computer 12 or to another apparatus, for example, for the generation of a token (or smart card) for the enrollee, an encrypted version of the enrollee's template for the particular biometric. The host computer 12 may store this encrypted biometric data also. The biometric template is encrypted using the private key specific to the entrusted sensor 14 (the private key being fixed in the trusted sensor 14 at manufacture) and is then transmitted to the host computer 12 using the host's public key. The microprocessor 34 also generates a registration certification for the generated public key for the host computer 12 to transfer to a recognized public key registration entity.

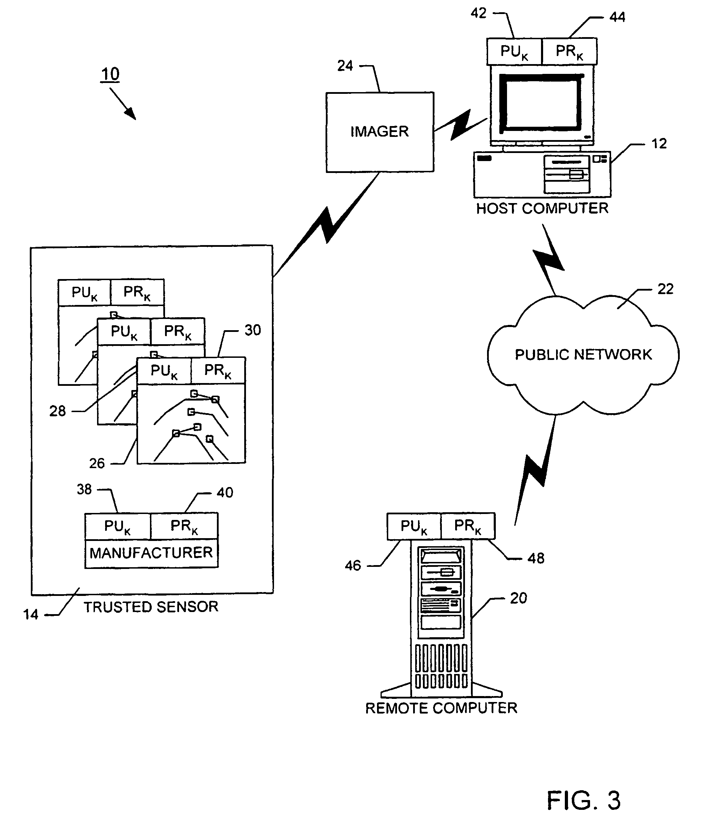

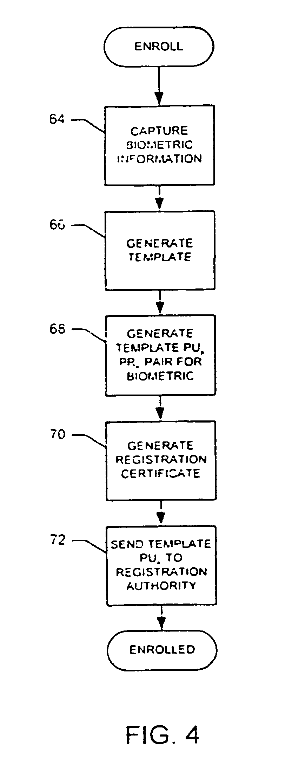

The enrollment process described above is depicted in FIG. 4 and discussed below. However, before turning to FIG. 4, it is useful to present a figure depieting an overview of the system first shown in FIG. 1 and described throughout this specification. For this we turn to FIG. 3.

FIG. 3 depicts a convenient view of the overall framework and inter-operating elements of the biometric encryption system. Shown in FIG. 3 are not only the elements described with reference to FIG. 1, but the various public key/private key pairs described elsewhere in this specification. Because the connection of the elements was previously described with reference to FIG. 1, it is not further bolabored here.

The host computer 12 includes a public key 42 and a private key 44. Similarly, the remote computer 20 includes a public key 46 and a private key 48. Moreover, the trusted sensor 14, which may or may not directly include the imager 24, includes multiple sets of public keys and private keys. First, the trusted sensor 14 includes the public key 38 and private key 40 of the manufacturer of the trusted sensor 14. The manufacturer public key 38 and private key 40 can be associated with the imager 24, or they can be the public key/private key 30 pair for the feature extraction and template matching module 58. Second, the trusted sensor 14 includes a public key 28 and private key pair for each biometric template 26 (for example a fingerprint constellation) stored in the trusted sensor 14. Multiple sets of public key/private key pairs can be stored in the trusted sensor 14 one for each specific template/biometric used.

Now turning to FIG. 4, which depicts the enrollment process described above, at step 64 the imager 24 captures biometric information, for example, using a capacitive fingerprint sensor such as the Veridicom, Inc. part no. FPS110. Features are extracted from the image, for example by feature extraction and template matching module 58 and a template (for example a fingerprint constellation) is generated in step 66. Next, a public key 28 private key 30 pair is generated for the captured biometric information. This pair is stored in the trusted sensor 14. In step 70, a registration certificate is generated that includes the public key 28. In step 72 the registration certificate (including the public key 28) is set to a registration authority, preferably connected to public network 22. When sending the public key 28 to the registration authority, the host computer 12 is used as an intermediary, as the trusted sensor 14 is not necessarily directly connected to the public network 22. Once the public key 28 and private key 30 are generated and the public key 28 is sent to the registration authority, the biometric information is enrolled.

Now turning to FIG. 5, it depicts the sensor verification process described above. For convenience, it is set forth again here. In step 73, the host computer 12 generates a random number. The random number is encrypted with the public key 38 and private key 44 at step 74. In step in step 76, the encrypted random number is sent from the host computer 12 to the trusted sensor 14. In step 80, the trusted sensor 14 receives the encrypted random number and, in step 82, decrypts the random number using the private key 40 and public key 42. Next, in step 84, the random number is modified. In step 86, the modified random number is then encrypted with the private key 40 and the public key 42 and then sent to the host computer 12 at step 88. In step 90, the encrypted modified random number is received from the trusted sensor 14 and decrypted, in step 92, with the private key 44 and public key 38. The modification to the random number is verified by the host computer 12 in step 94, and if it matches the original random number generated at step 73, then the sensor 14 is then verified to be the trusted sensor 14. Now the trusted sensor 14 is ready for operation in the system 10.

It is noted that in step 73, the host computer can be an intermediary between the remote computer 20 and the sensor 14. In such an embodiment, the remote computer 20 can generate the random number or a hashing code and it is this value, encrypted by the remote computer 20 with the public key 38 and, of course, the private key 48, that can be verified through the process described above.

Thereafter, the enrollee presents his/her appropriate biometric to the image capture device at the host computer 12 or the trusted sensor 14. A template is generated from the input biometric image data, Upon verification of a match with an enrolled template 26, the trusted sensor 14 selects the private key 30 unique to the enrolled template 26. This private key 30 can be used to encrypt an entire message provided by the host computer 12 to the trusted sensor 14 for transmission back to the host computer 12. The host computer can then transmit the encrypted message to the intended recipient. For this purpose the host computer also transmits to the trusted sensor 14 the public key 46 of the recipient. More conveniently, the host computer 12 transmits to the trusted sensor 14 a coded representation of the message to be sent, e.g., a hashing code of the message, and the trusted sensor 14 uses the generated private key 30 to encrypt the hashing code and transmits the encrypted message to the host computer 12 for transmission along with the message. The recipient of the message creates an identical hashing code of from the received massage and decrypts the encrypted hashing code and compares the two. An identical match insures that the message was received from the registered owner of the public key. In a similar manner, the trusted sensor 14, may encrypt a date stamp or a large monotonically increasing number provided by the date stamp module 52 and transmit the value to the host computer 12 for inclusion in the message.

In operation, therefore, the trusted sensor 14 is only able to be accessed by a host computer 12 with the manufacturer or trusted sensor 14 specific public key, and the trusted sensor 14 responds only to such a host computer 12. Upon the production of the appropriate biometric image either by the host computer 12 or directly by the trusted sensor 14, the trusted sensor 14 processes the image from the ICD and creates the distinguishing template. If the distinguishing template matches a stored template within the trusted sensor 14 the stored public key/private key pair of the enrollee is accessed.

The secure interface between the enrollee's host computer 12 and the trusted sensor 14 using the manufacturer or sensor public key and the paired private key within the trusted sensor 14 ensures certification of the message and authenticated access only by the real enrollee having the proper biometric matching the internally stored template. The recipient, knowing that it is communicating with a machine using the manufacturer's (or sensor specific) public key 38/private key 40 pair, is assured that the sending host computer 12 has authenticated the use by the proper enrollee.

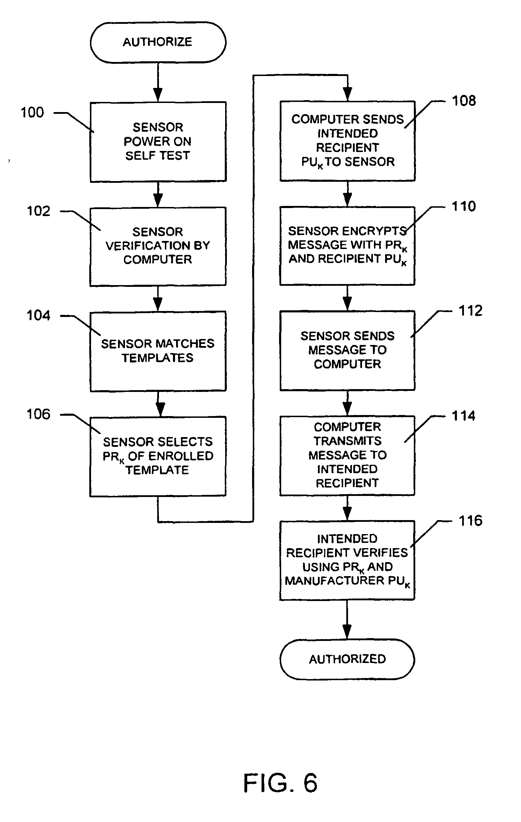

The overall authentication process described above is depicted in FIG. 6. It is assumed for purposes of this explanation that some triggering event, for example an interrupt from the remote computer 20 (or "mtended recipient") has caused the trusted sensor 14 to become active.

In step 100, the sensor 14 performs the power on self-test (POST) using module 62. In step 102, using the process described above, for instance in FIG. 5, the sensor 14 is verified by the host computer 12. In step 104, the imager 24 collects biometric information and the trusted sensor 14 will match the biometric information (a template) to a stored template 26. In step 106, assuming a successful match at step 104, the trusted sensor 14 selects the private key 30 corresponding to the matched stored template 26.

In step 108, the host computer 12 sends a hashing code or some other coded representation of the message to be returned to the remote computer 20, together with the remote computer 20 public key 46 to the trusted sensor 14. (It is noted that step 108 can be the triggering event that initiated the overall process earlier described above and shown in FIG. 6.) The trusted sensor 14, having been verified in step 102, encrypts the message using the biometric (e.g., fingerprint) template 26 private key 30 and intended recipient public key 46 in step 110. In step 112, the trusted sensor 14 sends the encrypted message to the host computer 12, which then re-transmits the encrypted message to the remote computer 20 in step 114. In step 116, the remote computer 20 verifies the encrypted message by decrypting it using the template public key 28 and the remote computer private key 48. When the message is verified, the authorization from the enrolled user of the trusted sensor 14 is confirmed.

A system as described above is highly useful in an environment where non-repudiation of a contract, or affirmation of a transaction with a remote user is desired. For example, the system can be implemented in a wireless telephone, a personal digital assistant, or a laptop or desktop computer. In such an instance, the host computer 12 would be the particular electronic device the trusted sensor 14 is incorporated into. For instance, the system can be incorporated into any of the electronic devices described in U.S. Patent Application Serial No. 09/536,242, filed March 27, 2000, entitled BIOMETRIC SENSING AND DISPLAY DEVICE.

## Claims

1. A trusted sensor (14) for authentication of biometric information used in an encryption system, said trusted sensor (14) disposed on at least one integrated circuit and comprising:
a microprocessor (34);
a data memory (36) coupled to said microprocessor (34) and configured to hold a plurality of templates representing enrolled biometric information, a biometric public key private key pair corresponding to each of said plurality of templates, and a manufacturer public key and private key pair; and
a functions section (32) coupled to said microprocessor (34), said functions section comprising:
a cryptographic library module (60) storing one or more public key private key encryption functions and further storing instructions for causing said microprocessor (34) to populate said biometric public key and private key pair corresponding to each of said plurality of templates;
a feature extraction and template matching module (58) storing instructions for causing said microprocessor (34) to extract features created with a biometric image capture device (24) coupled to said trusted sensor (14) and to populate to at least one of said plurality of templates, and further storing instructions for causing said microprocessor (34) to match sensed biometric information, communicated from said biometric image capture device (24), to said enrolled biometric information stored in said data memory (36) and, if a match is found, then select a particular biometric private key, however, if a match is not found, than deny access to the key pairs and cryptographic library module (60); and
an authentication module (56) storing instructions for causing said microprocessor (34) to certify said trusted sensor (14) to a host computer by executing said one or more encryption functions stored in said cryptographic module (60) using said manufacturer private key and a host computer public key,

2. The trusted sensor of claim 1, said authentication module (56) further storing instructions for causing said microprocessor (34) to execute said one or more encryption functions stored in said cryptographic library module (60) using said particular biometric private key, a public key corresponding to a remote computer, said one or more encryption functions encrypting a message destined for said remote computer.

3. The trusted sensor of claim 2:
Wherein said biometric image capture device (24) includes a plurality of capacitive fingerprint sensing elements; and
wherein said manufacturer public key and private key pair correspond to said plurality of capacitive fingerprint sensing elements.

4. The trusted sensor of claim 2:
wherein said biometric image capture device (24) includes a plurality of capacitive fingerprint sensing elements; and
wherein said manufacturer public key and private key pair correspond to said functions section (32).

5. The trusted sensor of claims 3 or 4, said functions section further comprising:
a power on self-test and tamper detect feature (62) storing instructions for causing said microprocessor (34) to enable said trusted sensor (14) when said power on self-test is successful and said tamper detected feature detects no tampering;
a secure time stomp module (52) storing instructions for causing said microprocessor (34) to generate a time stamp used by said authentication module (56); and
a peripheral interface (50) configured to communicatively couple microprocessor (50) to said host computer over a secure communications link (16).

6. A method for authenticating the identity of an individual in a transaction using a trusted sensor (14), the method comprising:
performing a power on self-test on said trusted sensor (14);
verifying said trusted sensor (14) to a host computer (12) coupled to said trusted sensor (14), said step of verifying using a manufacturer private key (40) and a host computer public key (42);
receiving biometric information from an image capture device (24);
determining whether said biometric information from said image capture device (24) matches an enrolled biometric template (26) stored in said trusted sensor (14);
when the biometric information from said image capture device (24) does match said enrolled biometric template (26) stored in said trusted sensor (14), then:
selecting a public key (28) and private key (30) pair corresponding to said enrolled biometric template (26), said public key (28) and private key (30) pair stored in said trusted sensor (14);
receiving a massage from said host computer (12), said message including a remote computer public key (46);
encrypting at least a portion of said message using said selected private key (30) and said remote computer public key (46); and
sending said encrypted message from said trusted sensor (14) to said host computer (12); however,
When the biometric information from said image capture device (24) does not match said enrolled biometric template (26) stored in said trusted sensor (14), then deny access to the key pairs and cryptographic library module (60).

7. The method of claim 6, said step of verifying comprising:
receiving an encrypted random number from said host computer (12), said encrypted random number encrypted by said host computer (12) using a host computer private key (44) and a manufacturer public key (38);
decrypting said encrypted random number into a random number using said host computer public key (42) and said manufacturer private key (40);
modifying said random number;
encrypting said modified random number using said manufacturer private key (40) and said host computer public key (42); and
sending said encrypted modified random number to said host computer (12).

8. The method of claim 7, further comprising steps performed by said host computer (12), said steps comprising:
generating said random number;
encrypting said random number using said host computer private key (44) and said manufacturer public key (38) to form said encrypted random number;
sending said encrypted random number to said trusted sensor (14);
receiving said encrypted modified random number from said trusted sensor (14);
decrypting said encrypted modified random number using said host computer private key (44) and said manufacturer public key (38); and
verifying said modification performed by said trusted sensor (14) to said random number.

9. The method of claim 8, further comprising steps performed by said remote computer (20), said steps comprising:
encrypting a primary message with a remote computer private key (48) and a transaction public key, said transaction public key selected from e group comprising said host computer public key (42) and said selected public key (28);
receiving a confirmation message from said host computer (12), said confirmation message comprising said portion of said message encrypted at said trusted sensor (14) using said selected private key (30) and said remote computer public key (46); and
decrypting said portion of said confirmation message using said selected
transaction key and said remote computer private key (48).

10. A computer software product having stored therein one or more sequences of instructions for causing one or more microprocessors to perform the steps described in any of above claims 6 through 9.

11. A high security biometric authentication system (10) using public key private key pairs comprising:
a remote computer (20) including a remote computer public key (46) and private key (48) pair;
a host computer (12) coupled to said remote computer (20), said host computer (12) including a host computer public key (42) and private key (44) pair;
a biometric image sensing means (24) including a plurality of capacitive sensing elements for measuring relative distances between ridges and valleys on a fingerprint; and
a trusted sensor (14) coupled to said biometric image sensing means (24) and said host computer (12), said trusted sensor (14) including a microprocessor (34), and a data memory (36) including a plurality of biometric templates (26), each of said plurality of biometric templates (26) having a biometric template public key (28) and private key (30) pair and a manufacturer public key (38) and private key (40) pair, said plurality of biometric templates (26) comprising manipulated biometric information sensed by said biometric image sensing means (24), and said trusted sensor (14) further including a functions section (32) accessible by said microprocessor (34), said functions section (32) comprising a feature extraction and template matching module (58) comprising instructions for causing said microprocessor (34) to compare biometric information sensed by said biometric sensing means (24) to one or more of said plurality of biometric templates (26) and further comprising instructions to select a biometric template private key (30) only if a match is found.

12. The high security biometric authentication system (10) of claim 11, wherein said trusted sensor (14) is verified by host computer (12) by:
sending a first message from said host computer (12) to said trusted sensor (14), said first message encrypted with said host computer private key (44) and said manufacturer public key (38);
receiving said first message at said trusted sensor (14), decrypting said first message, manipulating a portion of said first message, returning a return first message to said host computer (12), said return first message including said manipulated portion of said first message and said return first message encrypted with said manufacturer private key (40) and said host computer public key (42); and
receiving said return first message from said trusted sensor (14) at said host computer (12), decrypting said return first message with said host computer private key (44) and said manufacturer public key (38) and verifying said manpulation to said portion of said first message.

13. The high security biometric authentication system (10) of claim 12, wherein a transaction is verified, after first verifying said trusted sensor (14), by:
sensing current user biometric information using said biometric image sensing means (24);
comparing said current user biometric information to said plurality of biometric templates (26);
selecting a particular biometric image template that matches said current user biometric information, said act of selecting including identifying a particular biometric public key and private key pair corresponding to said particular biometric image template;
encrypting a second message authorizing a transaction with said particular biometric private key and said remote computer public key (46);
sending said second message to said host computer (12):
receiving said second message from said trusted sensor (14) at said host computer (12);
re-transmitting said second message from host computer (12) to said remote computer (20);
receiving said re-transmitted second message from host computer (12) at said ramota computer (20); and
verifying said re-transmitted second message using said host computer private key (48) and said particular biometric public key.

14. The high security biometric authentication system (10) of claim 13:
wherein prior to said step of re-transmitting said second message, said host computer encrypts said second message using said host computer private key (44) and said remote computer public key (46); and
wherein said step of verifying said re-transmitted second message includes verifying said second message using said host computer public key (42).

## Patentansprüche

1. Vertrauenswürdiger Sensor (14) zum Authentifizieren von in einem Verschlüsselungssystem verwendeten biometrischen Informationen, wobei der vertrauenswürdige Sensor (14) auf wenigstens einem integrierten Schaltkreis angeordnet ist und aufweist:
einen Mikroprozessor (34);
einen an den Mikroprozessor (34) angeschlossenen Datenspeicher (36), der zum Halten einer Mehrzahl von Vorlagen, die eingetragene biometrische Informationen darstellen, eines Paares von biometrischem öffentlichem und privatem Schlüssel, das jeweils einer der Mehrzahl von Vorlagen entspricht, und eines Paares von öffentlichem und privatem Schlüssel des Herstellers eingerichtet ist; und
einen an den Mikroprozessor (34) angeschlossenen Funktionsbereich (32), welcher
ein Kryptographie-Bibliotheksmodul (60), das eine oder mehrere öffentlicher-Schlüssel-privater-Schlüssel-Verschlüsselungsfunktionen speichert und ferner Anweisungen speichert, mit denen der Mikroprozessor (34) angewiesen wird, das Paar von biometrischem öffentlichem und privatem Schlüssel, die jedem der Mehrzahl von Vorlagen entsprechen, aufzufüllen;
ein Merkmalextraktions- und Vorlagenüberstimmungsprüfmodul (58), das Anweisungen speichert, mit denen der Mikroprozessor (34) angewiesen wird, Merkmale zu extrahieren, die mit einer an den vertrauenswürdigen Sensor (14) angeschlossenen biometrischen Bilderfassungsvorrichtung (24) erzeugt sind, und in die wenigstens eine der Mehrzahl von Vorlagen aufzufüllen, und ferner Anweisungen speichert, mit denen der Mikroprozessor (34) angewiesen wird, abgetastete biometrische Informationen, die von der biometrischen Bilderfassungsvorrichtung (24) übertragen sind, mit den eingetragenen biometrischen Informationen, die in dem Datenspeicher (36) gespeichert sind, zu vergleichen, und, falls eine Übereinstimmung gefunden wird, dann einen bestimmten biometrischen privaten Schlüssel auszuwählen, falls jedoch keine Übereinstimmung gefunden wird, dann Zugriff auf die Schlüsselpaare und das kryptographische Bibliotheksmodul (60) zu verweigern; und
ein Authentifikationsmodul (56) aufweist, das Anweisungen speichert, mit denen der Mikroprozessor (34) angewiesen wird, den vertrauenswürdigen Sensor (14) an einem Host-Rechner zu zertifizieren, indem die eine oder mehrere Verschlüsselungsfunktionen, die in dem Kryptograpiemodul (60) gespeichert sind, unter Verwendung des privaten Schlüssels des Herstellers und eines öffentlichen Schlüssels des Host-Rechners ausgeführt werden.

2. Vertrauenswürdiger Sensor gemäß Anspruch 1, wobei das Authentifikationsmodul (56) ferner Anweisungen speichert, mit denen der Mikroprozessor (34) angewiesen wird, die eine oder mehrere Verschlüsselungsfunktionen, die in dem kryptographischen Bibliotheksmodul (60) gespeichert sind, unter Verwendung des biometrischen privaten Schlüssels, eines öffentlichen Schlüssels, der einem entfernten Rechner entspricht, auszuführen, wobei die eine oder mehrere Verschlüsselungsfunktionen eine Nachricht verschlüsseln, die für den entfernten Rechner bestimmt ist.

3. Vertrauenswürdiger Sensor gemäß Anspruch 2:
wobei die biometrische Bilderfassungsvorrichtung (24) eine Mehrzahl von kapazitiven Fingerabdruck-Erfassungselementen aufweist; und
wobei das Paar des öffentlichen und des privaten Schlüssels des Herstellers der Mehrzahl von kapazitiven Fingerabdruck-Erfassungselementen entspricht.

4. Vertrauenswürdiger Sensor gemäß Anspruch 2,
wobei die biometrische Bilderfassungsvorrichtung (24) eine Mehrzahl von kapazitiven Fingerabdruck-Erfassungselementen aufweist; und
wobei das Paar des öffentlichen und des privaten Schlüssels des Herstellers dem Funktionsbereich (32) entspricht.

5. Vertrauenswürdiger Sensor gemäß Anspruch 3 oder 4, wobei der Funktionsbereich ferner aufweist:
ein Einschalt-Selbsttest- und Manipulations-Detektions-Merkmal (62), das Anweisungen speichert, mit denen der Mikroprozessor (34) angewiesen wird, den vertrauenswürdigen Sensor (14) freizugeben, wenn der Einschalt-Selbsttest erfolgreich ist und das Manipulations-Detektions-Merkmal keine Manipulation detektiert;
ein Sicherheits-Zeitstempel-Modul (52), das Anweisungen speichert, mit denen der Mikroprozessor (34) angewiesen wird, einen Zeitstempel zu erzeugen, der von dem Authentifikationsmodul (56) verwendet wird; und
eine Peripherieschnittstelle (50), die zum kommunikativen Anschließen des Mikroprozessors (50) an den Host-Rechner über eine sichere Kommunikationsverbindung (16) eingerichtet ist.

6. Verfahren zum Authentifizieren der Identität eines Individuums in einer Transaktion unter Verwendung eines vertrauenswürdigen Sensors (14), wobei das Verfahren aufweist:
Ausführen eines Einschalt-Selbsttests an dem vertrauenswürdigen Sensor (14);
Verifizieren des vertrauenswürdigen Sensors (14) an einem an den vertrauenswürdigen Sensor (14) angeschlossenen Host-Rechner (12), wobei der Schritt des Verifizierens einen privaten Schlüssel (40) des Herstellers und einen öffentlichen Schlüssel (42) des Host-Rechners verwendet;
Empfangen biometrischer Informationen von einer Bilderfassungsvorrichtung (24);
Bestimmen, ob die biometrischen Informationen von der Bilderfassungsvorrichtung (24) mit einer eingetragenen biometrischen Vorlage (26), die in dem vertrauenswürdigen Sensor (14) gespeichert ist, übereinstimmen;
wenn die biometrischen Informationen von der Bilderfassungsvorrichtung (24) mit der eingetragenen biometrischen Vorlage (26), die in dem vertrauenswürdigen Sensor (14) gespeichert ist, übereinstimmen, dann:
Auswählen eines Paares eines öffentlichen (28) und eines privaten Schlüssels (30), das der eingetragenen biometrischen Vorlage (26) entspricht, wobei das Paar aus öffentlichem (28) und privatem Schlüssel (30) in dem vertrauenswürdigen Sensor (14) gespeichert ist;
Empfangen einer Nachricht von dem Host-Rechner (12), wobei die Nachricht einen öffentlichen Schlüssel (46) eines entfernten Rechners aufweist;
Verschlüsseln von wenigstens einem Teil der Nachricht unter Verwendung des ausgewählten privaten Schlüssels (30) und des öffentlichen Schlüssels (46) des entfernten Rechners; und
Senden der verschlüsselten Nachricht von dem vertrauenswürdigen Sensor (14) zu dem Host-Rechner (12); jedoch,
wenn die biometrischen Informationen von der Bilderfassungsvorrichtung (24) mit der eingetragenen biometrischen Vorlage (26), die in dem vertrauenswürdigen Sensor (14) gespeichert ist, nicht übereinstimmen, dann Verweigern des Zugriffs auf die Schlüsselpaare und das Kryptographie-Bibliotheksmodul (60).

7. Verfahren gemäß Anspruch 6, wobei der Schritt des Verifizierens aufweist:
Empfangen einer verschlüsselten Zufallszahl von dem Host-Rechner (33), wobei die verschlüsselte Zufallszahl von dem Host-Rechner (12) unter Verwendung eines privaten Schlüssels (44) des Host-Rechners und eines öffentlichen Schlussels (38) des Herstellers verschlüsselt ist;
Entschlüsseln der verschlüsselten Zufallszahl in eine Zufallszahl unter Verwendung des öffentlichen Schlüssels (42) des Host-Rechners und des privaten Schlüssels (40) des Herstellers;
Ändern der Zufallszahl;
Verschlüsseln der geänderten Zufallszahl unter Verwendung des privaten Schlüssels (40) des Herstellers und des öffentlichen Schlüssels (42) des Host-Rechners; und
Senden der verschlüsselten geänderten Zufallszahl an den Host-Rechner (12).

8. Verfahren gemäß Anspruch 7, das ferner Schritte aufweist, die von dem Host-Rechner ausgeführt werden, wobei die Schritte aufweisen:
Erzeugen der Zufallszahl;
Verschlüsseln der Zufallszahl unter Verwendung des privaten Schlüssels (44) des Host-Rechners und des öffentlichen Schlüssels (38) des Herstellers zum Bilden der verschlüsselten Zufallszahl;
Senden der verschlüsselten Zufallszahl an den vertrauenswürdigen Sensor (14);
Empfangen der verschlüsselten geänderten Zufallszahl von dem vertrauenswürdigen Sensor (14);
Entschlüsseln der verschlüsselten geänderten Zufallszahl unter Verwendung des privaten Schlüssels (44) des Host-Rechners und des offentlichen Schlüssels (38) des Herstellers; und
Verifizieren der Änderung an der Zufallszahl, die von dem vertrauenswürdigen Sensor (14) ausgeführt wurde.

9. Verfahren gemäß Anspruch 8, das ferner Schritte aufweist, die von dem entfernten Rechner (20) ausgeführt werden, wobei die Schritte aufweisen:
Verschlüsseln einer Primärnachricht mit einem privaten Schlüssel (48) des entfernten Rechners und einem öffentlichen Übertragungsschlüssel, wobei der öffentliche Übertragungsschlüssel aus einer Gruppe ausgewählt wird, die den öffentlichen Schlüssel (42) des Host-Rechners und den ausgewählten öffentlichen Schlüssel (28) aufweist;
Empfangen einer Bestätigungsnachricht von dem Host-Rechner (12), wobei die Bestätigungsnachricht den Anteil der Nachricht aufweist, der von dem vertrauenswürdigen Sensor (14) unter Verwendung des ausgewählten privaten Schlüssels (30) und des öffentlichen Schlüssels (46) des entfernten Rechners verschlüsselt wurde; und
Entschlüsseln des Anteils der Bestätigungsnachricht unter Verwendung des ausgewählten Übertragungsschlüssels und des privaten Schlüssels (48) des entfernten Rechners.

10. Rechnersoftwareprodukt mit einer oder mehreren darin gespeicherten Anweisungssequenzen, mit denen ein oder mehrere Mikroprozessoren angewiesen werden, die Schritte auszuführen, die in einem der obigen Ansprüche 6 bis 9 beschrieben sind.

11. Hochsicherheits-Biometrie-Authentifizierungssystem (10), das Paare von öffentlichen und privaten Schlüsseln verwendet, aufweisend:
einen entfernten Rechner (20), der ein Paar öffentlichem Schlüssel (46) und privatem Schlüssel (48) des entfernten Rechners aufweist;
einen an den entfernten Rechner (20) angeschlossenen Host-Rechner (12), wobei der Host-Rechner (12) ein Paar von öffentlichem Schlüssel (42) und privatem Schlüssel (44) des Host-Rechners aufweist;
ein biometrisches Bilderfassungsmittel (24), das eine Mehrzahl von kapazitiven Erfassungsmitteln zum Messen relativer Abstände zwischen Rücken und Tälern auf einem Fingerabdruck aufweist; und
einen an das biometrische Bilderfassungsmittel (24) und den Host-Rechner (12) angeschlossenen vertrauenswürdigen Sensor (14), wobei der vertrauenswürdige Sensor (14) einen Mikroprozessor (34) und einen Datenspeicher (36) mit einer Mehrzahl von biometrischen Vorlagen (26) aufweist, wobei jede der Mehrzahl von biometrischen Vorlagen (26) ein Paar von öffentlichem Schlüssel (28) und privatem Schlüssel (30) der biometrischen Vorlage und ein Paar von öffentlichem Schlüssel (38) und privatem Schlüssel (40) des Herstellers aufweist,
wobei die Mehrzahl von biometrischen Vorlagen (26) manipulierte biometrische Informationen aufweist, die von dem biometrischen Bilderfassungsmittel (24) erfasst sind, und der vertrauenswürdige Sensor (14) ferner einen Funktionsbereich (32) aufweist, auf den der Mikroprozessor (34) zugreifen kann,
wobei der Funktionsbereich (32) ein Merkmalextraktions- und Vorlagenüberstimmungsprüfmodul (58) aufweist, das Anweisungen aufweist, mit denen der Mikroprozessor (34) angewiesen wird, von dem biometrischen Erfassungsmittel (24) erfasste biometrische Informationen mit einer oder mehreren der Mehrzahl von biometrischen Vorlagen (26) zu vergleichen und ferner Anweisungen aufweist, um nur dann einen privaten Schlüssel (30) einer biometrischen Vorlage auszuwählen, wenn eine Übereinstimmung gefunden ist.

12. Hochsicherheits-Biometrie-Authentifizierungssystem (10) gemäß Anspruch 11, wobei der vertrauenswürdige Sensor (14) von dem Host-Rechner (12) durch
Senden einer ersten Nachricht von dem Host-Rechner (12) an den vertrauenswürdigen Sensor (14), wobei die erste Nachricht mit dem privaten Schlüssel (44) des Host-Rechners und dem öffentlichen Schlüssel (38) des Herstellers verschlüsselt ist;
Empfangen der ersten Nachricht an dem vertrauenswürdigen Sensor (14), Entschlüsseln der ersten Nachricht, Manipulieren eines Anteils der ersten Nachricht, Zurücksenden einer Erwiderungs-Erstnachricht an den Host-Rechner (12), wobei die Erwiderungs-Erstnachricht den manipulierten Anteil der ersten Nachricht aufweist, und die Erwiderungs-Erstnachricht mit dem privaten Schlüssel (40) des Herstellers und dem öffentlichen Schlüssel (42) des Host-Rechners verschlüsselt ist; und
Empfangen der Erwiderungs-Erstnachricht von dem vertrauenswürdigen Sensor (14) an dem Host-Rechner (12), Entschlüsseln der Erwiderungs-Erstnachricht mit dem privaten Schlüssel (44) des Host-Rechners und dem öffentlichen Schlüssel (38) des Herstellers und Verifizieren der Änderung an dem Anteil der ersten Nachricht,
verifiziert ist.

13. Hochsicherheits-Biometrie-Authentifizierungssystem (10) gemäß Anspruch 12, wobei eine Transaktion verifiziert wird, nachdem zuerst der vertrauenswürdige Sensor (14) verifiziert wurde, durch:
Erfassen biometrischer Informationen eines gegenwärtigen Benutzers unter Verwendung des biometrischen Bilderfassungsmittels (24);
Vergleichen der biometrischen Informationen des gegenwärtigen Benutzers mit der Mehrzahl von biometrischen Vorlagen (26);
Auswählen einer bestimmten biometrischen Bildvorlage, die mit den biometrischen Informationen des gegenwärtigen Benutzers übereinstimmt, wobei der Akt des Auswählens das Identifizieren eines bestimmten Paares von biometrischem öffentlichem Schlüssel und privatem Schlüssel aufweist, das der bestimmten biometrischen Bildvorlage entspricht;
Verschlüsseln einer zweiten Nachricht, die eine Transaktion mit dem bestimmten biometrischen privaten Schlüssel und dem öffentlichen Schlüssel (46) des entfernten Schlüssels autorisiert;
Senden der zweiten Nachricht an den Host-Rechner (12);
Empfangen der zweiten Nachricht von dem vertrauenswürdigen Sensor (14) an dem Host-Rechner (12);
Zurück-Übermitteln der zweiten Nachricht von dem Host-Rechner (12) an den entfernten Rechner (20);
Empfangen der von dem Host-Rechner (12) an den entfernten Rechner (20) zurück-übermittelten zweiten Nachricht; und
Verifizieren der zuruck-übermittelten zweiten Nachricht unter Verwendung des privaten Schlüssels (48) des Host-Rechners und des bestimmten biometrischen öffentlichen Schlüssels.

14. Hochsicherheits-Biometrie-Authentifizierungssystem (10) gemäß Anspruch 13:
wobei, vor dem Schritt des Zurück-Übermittelns der zweiten Nachricht, der Host-Rechner die zweite Nachricht unter Verwendung des privaten Schlüssels (44) des Host-Rechners und des öffentlichen Schlüssels (46) des entfernten Rechners verschlüsselt; und
wobei der Schritt des Verifizierens der zurück-übermittelten zweiten Nachricht ein Verifizieren der zweiten Nachricht unter Verwendung des öffentlichen Schlüssels (42) des Host-Rechners aufweist.

## Revendications

1. Capteur sécurisé (14) destiné à l'authentification des informations biométriques utilisées dans un système de chiffrement, ledit capteur sécurisé (14) étant disposé sur au moins un circuit intégré et comprenant :
un microprocesseur (34) ;
une mémoire de données (36) couplée audit microprocesseur (34) et configurée pour conserver une pluralité de modèles représentant des informations biométriques inscrites, une paire biométrique clé publique/clé privée correspondant à chaque modèle de ladite pluralité de modèles, et une paire constructeur clé publique/clé privée ; et
une section fonctionnelle (32) couplée audit microprocesseur (34), ladite section fonctionnelle comprenant :
un module de bibliothèque cryptographique (60) stockant une ou plusieurs fonctions de chiffrement clé publique/clé privée et stockant en outre des instructions destinées à causer le chargement par ledit microprocesseur (34) de ladite paire biométrique clé publique/clé privée correspondant à chacun de ladite pluralité de modèles ;
un module d'extraction des traits caractéristiques et de correspondance de modèle (58) stockant les instructions destinées à entraîner l'extraction par ledit microprocesseur (34) des traits caractéristiques crées avec un dispositif de capture d'image biométrique (24) couplé audit capteur sécurisé (14) et le chargement d'au moins l'un de ladite pluralité des modèles, et stockant en outre des instructions destinées à entraîner la correspondance par ledit microprocesseur (34) des informations biométriques détectées, communiquées à partir dudit dispositif de capture d'image biométrique (24), par rapport auxdites informations biométriques inscrites stockées dans ladite mémoire de données (36) et, si une correspondance est trouvée, alors la sélection d'une clé privée biométrique particulière, cependant, si on ne trouve pas de correspondance, alors interdiction d'accès aux paires de clé et au module de bibliothèque cryptographique (60) ; et
un module d'authentification (56) stockant des instructions destinées à entraîner la certification par ledit microprocesseur (34) dudit capteur sécurisé (14) par rapport à un ordinateur hôte en exécutant ladite ou lesdites fonctions de chiffrement stockées dans ledit module cryptographique (60) utilisant lesdites clé privée du constructeur et une clé publique de l'ordinateur hôte.

2. Capteur sécurisé selon la revendication 1, ledit module d'authentification (56) stockant en outre des instructions destinées à entraîner l'exécution par ledit microprocesseur (34) à ladite ou lesdites fonctions de chiffrement stockées dans ledit module de bibliothèque cryptographique (60) utilisant ladite clé privée biométrique particulière, une clé publique correspondant à un ordinateur distant, ladite ou lesdites fonctions de chiffrement chiffrant un message destiné audit ordinateur distant.

3. Capteur sécurisé selon la revendication 2 :
dans lequel ledit dispositif biométrique de capture d'image biométrique (24) comprend une pluralité d'éléments de détection capacitifs d'empreinte digitale ; et
dans lequel ladite paire constructeur de clé publique/clé privée correspond à ladite pluralité d'éléments de détection capacitifs d'empreinte digitale.

4. Capteur sécurisé selon la revendication 2 :
dans lequel ledit dispositif biométrique de capture d'image (24) comprend une pluralité d'éléments de détection capacitifs d'empreinte digitale ; et
dans lequel ladite paire constructeur de clé publique/clé privée correspond à ladite section fonctionnelle (32).

5. Capteur sécurisé selon les revendications 3 ou 4, ladite section fonctionnelle comprenant en outre :
un autotest d'alimentation et une caractéristique de détection de corruptions (62) stockant des instructions destinées à entraîner
l'activation par ledit microprocesseur (34) dudit capteur sécurisé (14) lorsque ledit autotest d'alimentation est réussi et ladite caractéristique de détection de corruptions ne détecte aucune corruption ;
un module à estampille sécurisé (52) stockant des instructions destinées à entraîner la génération par ledit microprocesseur (34) d'une estampille utilisée par ledit module d'authentification (56) ; et
une interface périphérique (50) configurée pour coupler de façon communicative le microprocesseur (50) audit ordinateur hôte sur une liaison de communication sécurisée (16).

6. Procédé d'authentification de l'identité d'un individu dans une transaction utilisant un capteur sécurisé (14), lequel procédé comprend :
l'exécution d'un autotest d'alimentation sur ledit capteur sécurisé (14) ;
la vérification dudit capteur sécurisé (14) par rapport à un ordinateur hôte (12) couplé audit capteur sécurisé (14), ladite étape de vérification utilisant une clé privée de constructeur (40) et une clé publique d'ordinateur hôte (42) ;
la réception d'informations biométriques à partir d'un dispositif de capture d'image (24) ;
la détermination de savoir si lesdites informations biométriques provenant dudit dispositif de capture d'image (24) correspondent à un modèle biométrique inscrit (26) stocké dans ledit capteur sécurisé (14) ;
lorsque les informations biométriques provenant dudit dispositif de capture d'image (24) correspondent audit modèle biométrique inscrit (26) stocké dans ledit capteur sécurisé (14), alors :
la sélection d'une paire clé publique (28) et clé privée (30) correspondant audit modèle biométrique inscrit (26), à ladite paire clé publique (28) et clé privée (30) stockée dans ledit capteur sécurisé (14) ;
la réception d'un message provenant dudit ordinateur hôte (12), ledit message comprenant une clé publique d'ordinateur hôte (46) ;
le chiffrement d'au moins une partie dudit message utilisant ladite clé privée sélectionnée (30) et ladite clé publique d'ordinateur hôte (46) ; et
l'émission dudit message chiffré à partir dudit capteur sécurisé (14) vers ledit ordinateur hôte (12) ; cependant,
lorsque les informations biométriques provenant du dispositif de capture d'image (24) ne correspondent pas audit modèle biométrique inscrit (26) stocké dans ledit capteur sécurisé (14), alors interdiction d'accès aux paires de clés et au module de bibliothèque cryptographique (60).

7. Procédé selon la revendication 6, ladite étape de vérification comprenant :
la réception d'un numéro aléatoire chiffré provenant dudit ordinateur hôte (12), ledit numéro aléatoire chiffré crypté par ledit ordinateur hôte (12) utilisant une clé privée d'ordinateur hôte (44) et une clé publique de constructeur (38) ;
le déchiffrement dudit numéro aléatoire chiffré en un numéro aléatoire utilisant ladite clé publique d'ordinateur hôte (42) et ladite clé privée de constructeur (40) ;
la modification dudit numéro aléatoire ;
le chiffrement dudit numéro aléatoire modifié utilisant la clé privée de constructeur (40) et ladite clé publique d'ordinateur hôte (42) ; et
l'émission dudit numéro aléatoire modifié chiffré vers ledit ordinateur hôte (12).

8. Procédé selon la revendication 7, comprenant en outre les étapes exécutées par ledit ordinateur hôte (12), lesdites étapes comprenant :
la génération dudit numéro aléatoire ;
le chiffrement dudit numéro aléatoire utilisant ladite clé privée d'ordinateur hôte (44) et ladite clé publique de constructeur (38) pour former ledit numéro aléatoire chiffré ;
l'émission dudit numéro aléatoire chiffré audit capteur sécurisé (14) ;
la réception dudit numéro aléatoire modifié chiffré à partir dudit capteur sécurisé (14) ;
le déchiffrement dudit numéro aléatoire modifié chiffré utilisant ladite clé privée d'ordinateur hôte (44) et ladite clé publique de constructeur (38) ; et
la vérification de ladite modification exécutée par ledit capteur sécurisée (14) pour ledit numéro aléatoire.

9. Procédé selon la revendication 8, comprenant en outre les étapes exécutées par ledit ordinateur distant (20), lesdites étapes comprenant :
le chiffrement d'un message primaire avec une clé privée d'ordinateur distant (48) et une clé publique de transaction, ladite clé publique de transaction choisie parmi un groupe comprenant ladite clé publique d'ordinateur hôte (42) et ladite clé publique sélectionnée (28) ;
la réception d'un message de confirmation à partir dudit ordinateur hôte (12), ledit message de confirmation comprenant ladite partie dudit message chiffré audit capteur sécurisé (14) utilisant ladite clé privée sélectionnée (30) et ladite clé publique d'ordinateur distant (46) ; et
le déchiffrement de ladite partie dudit message de confirmation utilisant ladite clé de transaction sélectionnée et ladite clé privée d'ordinateur distant (48).

10. Produit informatique ayant stocké dans ce dernier une ou plusieurs séquences d'instructions destinées à entraîner l'exécution par un ou plusieurs microprocesseurs les étapes décrites dans l'une des revendications ci-dessus 6 à 9.

11. Système d'authentification biométrique haute sécurité (10) utilisant les paires clé publique/clé privée comprenant :
un ordinateur distant (20) comprenant une paire clé publique et clé privée (48) d'ordinateur distant (46) ;
un ordinateur hôte (12) couplé audit ordinateur distant (20), ledit ordinateur hôte (12) comprenant une paire de clé publique d'ordinateur hôte (42) et clé privée (44) ;
un moyen biométrique de détection d'image (24) comprenant une pluralité d'éléments de détection capacitifs destinés à mesurer les distances relatives entre les crêtes et les vallées sur une empreinte digitale ; et
un capteur sécurisé (14) couplé audit moyen biométrique de détection d'image biométrique (24) et audit ordinateur hôte (12), ledit capteur sécurisé (14) comprenant un microprocesseur (34), et une mémoire de données (36) comprenant une pluralité de modèles biométriques (26), chacun de ladite pluralité de modèles biométriques (26) ayant une paire clé publique (28) et clé privée (30) de modèle biométrique et une paire clé publique (38) et clé privée (40) de constructeur, ladite pluralité de modèles biométriques (26) comprenant des informations biométriques manipulées détectée par ledit moyen de détection d'image biométrique (24), et ledit capteur sécurisé (14) comprenant en outre une section fonctionnelle (32) accessible par ledit microprocesseur (34), ladite section fonctionnelle (32) comprenant un module d'extraction des traits caractéristiques et d'adaptation de modèle (58) comprenant des instructions destinées à entraîner la comparaison par ledit microprocesseur (34) des informations biométriques détectées par ledit moyen de détection biométrique (24) par rapport à l'un ou plusieurs de ladite pluralité de modèles biométriques (26) et comprenant en outre des instructions destinées à sélectionner une clé privée de modèle biométrique (30) uniquement si une correspondance est trouvée.

12. Système d'authentification biométrique haute sécurité (10) selon la revendication 11, dans lequel le capteur sécurisé (14) est vérifié par l'ordinateur hôte (12) en :
envoyant un premier message à partir dudit ordinateur hôte (12) vers ledit capteur sécurisé (14), ledit premier message chiffré avec ladite clé privée d'ordinateur hôte (44) et ladite clé publique de constructeur (38) ;
recevant ledit premier message audit capteur sécurisé (14), déchiffrant ledit premier message, manipulant une partie dudit premier message, renvoyant un premier message de retour audit ordinateur hôte (12), ledit premier message de retour comprenant la partie manipulée dudit premier message et ledit premier message de retour chiffré par ladite clé privée de constructeur (40) et ladite clé publique d'ordinateur hôte (42) ; et
recevant ledit premier message de retour à partir dudit capteur sécurisé (14) audit ordinateur hôte (12), déchiffrant ledit premier message de retour avec ladite clé privée d'ordinateur hôte (44) et ladite clé publique de constructeur (38) et vérifiant ladite manipulation pour ladite partie dudit premier message.

13. Système d'authentification biométrique haute sécurité (10) selon la revendication 12, dans lequel une transaction est vérifiée, après première vérification dudit capteur sécurisé (14) en :
détectant les informations biométriques courantes de l'utilisateur utilisant ledit moyen de détection d'image biométrique (24) ;
comparant lesdites informations biométriques courantes de l'utilisateur par rapport à ladite pluralité de modèles biométriques (26) ;
sélectionnant un modèle d'image biométrique particulier qui correspond auxdites informations biométriques courantes de l'utilisateur, ledit acte de sélection comprenant l'identification d'une paire particulière biométrique clé publique/clé privée correspondant audit modèle particulier biométrique d'image ;
chiffrant un second message autorisant une transaction avec ladite clé privée biométrique particulière et ladite clé publique d'ordinateur distant (46) ;
envoyant ledit second message vers ledit ordinateur hôte (12) ;
recevant ledit second message à partir dudit capteur sécurisé (14) audit ordinateur hôte (12) ;
retransmettant ledit second message à partir de l'ordinateur hôte (12) vers ledit ordinateur distant (20) ;
recevant ledit second message retransmis à partir de l'ordinateur hôte (12) vers ledit ordinateur distant (20) ; et
vérifiant ledit second message retransmis utilisant ladite clé privée d'ordinateur hôte (48) et ladite clé publique biométrique particulière.

14. Système d'authentification biométrique haute sécurité (10) selon la revendication 13 :
dans lequel, avant ladite étape de retransmission dudit second message, ledit ordinateur hôte chiffre ledit second message utilisant ladite clé privée d'ordinateur hôte (44) et ladite clé publique d'ordinateur distant (46) ; et
dans lequel ladite étape de vérification dudit second message retransmis comprend la vérification dudit second message utilisant ladite clé publique d'ordinateur hôte (42).
